# DEMANDE DE BREVET EUROPEEN

(11) **EP 4 852 241 A1**
(43) Date de publication de la demande: **09.12.2026**
(21) Numéro de dépôt: 25305806.9
(22) Date de dépôt: 03.06.2025
(51) Int. Cl.: H02B 1/056, H02B 1/06, H02B 1/21, H02B 1/16

(54) **DISPOSITIF DE DISTRIBUTION DE COURANT ÉLECTRIQUE, ENSEMBLE DE DISTRIBUTION ET ARMOIRE ÉLECTRIQUE ASSOCIÉS**

(71) Demandeur: SCHNEIDER ELECTRIC INDUSTRIES SAS, 92500 Rueil-Malmaison (FR)
(72) Inventeur: BADIN, Didier, 92500 RUEIL MALMAISON (FR); CARMENTRAN, Damien, 92500 RUEIL MALMAISON (FR); BON, Didier, 92500 RUEIL MALMAISON (FR); LINARES, Louis, 92500 RUEIL MALMAISON (FR)
(74) Mandataire: Lavoix

(57) **Abrégé**

La présente invention concerne un dispositif de distribution de courant électrique (30) comprenant au moins une barre de phase (40P), un support arrière (31), dans lequel la ou chaque barre de phase (40P) est insérée, et un support avant (33), recouvrant chaque barre de phase (40P).

Le dispositif de distribution (30) comprend en outre une barre de neutre (40N), alignée avec la barre de phase (40P), comprenant :
- une partie frontale (42), connectée électriquement, selon une direction de profondeur (Z30), à un dispositif de protection électrique (50);
- une partie latérale (44), qui est reliée à la partie frontale (42),

la partie frontale (42) est disposée au moins partiellement entre le support avant (31) et la partie latérale (44), et
la partie latérale (44) s'étend depuis la partie frontale (42) en formant un angle (A44) avec la partie frontale (42) et en s'éloignant de la barre de phase (40P).

## Description

La présente invention concerne un dispositif de distribution de courant électrique, un ensemble de distribution et une armoire électrique associés.

Il est connu que, selon les normes en vigueur ou les besoins d'un utilisateur, dans une armoire électrique, certains dispositifs de protection électrique, comme les disjoncteurs miniatures, ou MCB, de l'anglais « Miniature Circuit Breaker », ne sont connectés électriquement qu'à une barre de phase, et ne sont pas connectés électriquement à une barre de neutre. Il est cependant nécessaire qu'une charge en aval du dispositif de protection électrique soit connectée à la barre de neutre. La connexion de la charge à la barre de neutre est alors réalisée indépendamment du dispositif de protection électrique.

Par ailleurs, d'autres dispositifs de protection électrique, comme les disjoncteurs différentiels avec protection contre les surcharges, ou RCBO, de l'anglais « Residual Current Circuit Breaker with Overcurrent Protection », sont connectés électriquement à une barre de phase et à la barre de neutre.

Ainsi, dans certaines armoires électriques, les deux types de dispositifs coexistent. Dans ce cas, un dispositif de distribution de courant électrique comprend deux barres de neutre, une pour connecter la charge lorsque le dispositif de protection électrique n'est pas connecté au neutre, et une autre pour connecter les dispositifs de protection électrique qui se connectent à la fois à la barre de phase et à la barre de neutre. Dans ce cas, les deux barres de neutre sont connectées électriquement entre elles en amont.

Ceci augmente la complexité du dispositif de distribution de courant électrique, son coût et son encombrement par rapport à un dispositif de distribution standard à une seule barre de neutre. Cela implique également une installation plus complexe, puisque les barres de neutre doivent être connectées l'une à l'autre.

Le but de l'invention est alors de proposer un dispositif de distribution plus simple, et plus facile à installer.

A cet effet, l'invention a pour objet un dispositif de distribution de courant électrique pour une armoire électrique, le dispositif de distribution comprenant :
- au moins une barre de phase, s'étendant selon une direction longitudinale ;
- un support arrière, dans lequel la ou chaque barre de phase est insérée ;
- un support avant, recouvrant chaque barre de phase selon une direction de profondeur.
Selon l'invention, le dispositif de distribution comprend en outre une barre de neutre, s'étendant selon la direction longitudinale, la barre de neutre étant alignée avec la barre de phase selon une direction transversale, la barre de neutre comprenant :
- une partie frontale, s'étendant parallèlement à la direction longitudinale, afin d'être connectée électriquement, selon la direction de profondeur, à un dispositif de protection électrique monté sur le dispositif de distribution;
- une partie latérale, qui s'étend parallèlement à la direction longitudinale, qui est reliée à la partie frontale,

la partie frontale est disposée au moins partiellement entre le support avant et la partie latérale selon la direction de profondeur, et

la partie latérale s'étend depuis la partie frontale parallèlement à une direction latérale, en formant un angle avec la partie frontale et en s'éloignant de la barre de phase, afin de connecter électriquement, selon la direction latérale, la partie latérale à un connecteur auxiliaire de neutre monté sur le dispositif.

Grâce à l'invention, il est possible d'avoir une unique barre de neutre pour connecter un connecteur auxiliaire de neutre sur la barre de neutre, et des dispositifs de protection électrique qui se connectent à la fois sur la phase et sur le neutre.

En effet, la forme particulière de la barre de neutre permet une connexion à la barre de neutre à la fois selon la direction de profondeur et selon la direction transversale. Par exemple, les dispositifs de protection électrique qui comprennent des disjoncteurs qui se connectent à la fois à la barre de phase et à la barre de neutre, se connectent selon la direction de profondeur. Les connecteurs auxiliaires de neutre, qui permettent par exemple de connecter une charge à la barre de neutre, et qui sont utilisés en plus d'un dispositif de protection électrique qui est uniquement connecté à la ou à l'une des barres de phase et à la charge, peuvent se connecter à la même barre de neutre, selon la direction transversale.

Le dispositif de distribution est ainsi plus simple, puisqu'il contient moins de pièces que les dispositifs de distribution connus, et plus facile à installer, puisqu'il n'est pas nécessaire de connecter deux barres de neutre entre elles.

Suivant d'autres aspects avantageux de l'invention, le dispositif de distribution comprend une ou plusieurs des caractéristiques suivantes, prises isolément ou suivant toutes les combinaisons techniquement possibles :
- Le dispositif de distribution comprend une pluralité de barres de phase, chaque barre de phase s'étendant selon la direction longitudinale, les barres de phase étant disposées parallèlement les unes par rapport aux autres selon la direction transversale, et la barre de neutre étant alignée avec les barres de phase selon la direction transversale et les barres de phase étant disposées par-delà la barre de neutre selon la direction transversale.
- La partie latérale est reliée à la partie frontale en étant reliée à une face longitudinale et à un bord latéral distal de la partie frontale.
- Une largeur de la partie frontale, mesurée selon la direction de profondeur, est strictement supérieure à une largeur de la partie latérale, mesurée selon la direction latérale.
- L'angle formé entre les parties frontale et latérale est compris entre 80 et 100 degrés, de préférence compris entre 85 et 95 degrés.
- Les parties frontale et latérale viennent de matière l'une avec l'autre.
- Le dispositif de distribution comprend en outre une barre de terre, s'étendant selon la direction longitudinale, la barre de terre étant disposée à distance de la barre de neutre selon les directions transversale et de profondeur, de sorte qu'un connecteur auxiliaire de terre monté sur le dispositif de distribution se connecte à la barre de terre selon la direction transversale.

L'invention concerne également un ensemble de distribution comprenant :
- un dispositif de distribution ainsi que décrit précédemment ;
- un dispositif de protection électrique, monté sur le dispositif de distribution, le dispositif de protection électrique comprenant un connecteur de neutre, connecté électriquement et directement à la partie frontale selon la direction de profondeur ; et
- un connecteur auxiliaire de neutre, inclus dans une unité auxiliaire de neutre montée sur le dispositif de distribution, le connecteur auxiliaire de neutre étant connecté électriquement et directement à la partie latérale selon la direction latérale.

L'invention concerne également un ensemble de distribution, comprenant :
- un dispositif de distribution ;
- un dispositif de protection électrique, monté sur le dispositif de distribution, le dispositif de protection électrique comprenant un connecteur de neutre, connecté électriquement et directement à la partie frontale selon la direction de profondeur, un connecteur auxiliaire de neutre, connecté électriquement et directement à la partie latérale selon la direction transversale ; et
- un connecteur auxiliaire de terre, inclus dans une unité auxiliaire de terre montée sur le dispositif de distribution, le connecteur auxiliaire de terre étant connecté électriquement et directement à la barre de terre selon la direction transversale ;

L'invention concerne également une armoire électrique, comprenant :
- un coffre délimitant une enceinte et présentant un fond ; et
- un ensemble de distribution ainsi que décrit précédemment, le dispositif de distribution étant disposé dans l'enceinte et fixé sur le fond du coffre.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en perpsective d'une armoire électrique selon l'invention ;
[Fig. 2] la figure 2 est une vue de côté d'une ensemble de distribution selon l'invention ;
[Fig. 3] la figure 3 est une coupe du dispositif de distribution de la figrue 1 selon le plan III ; et
[Fig. 4] la figure 4 est une coupe du dispositif de distribution de la figure 1 selon le plan IV.

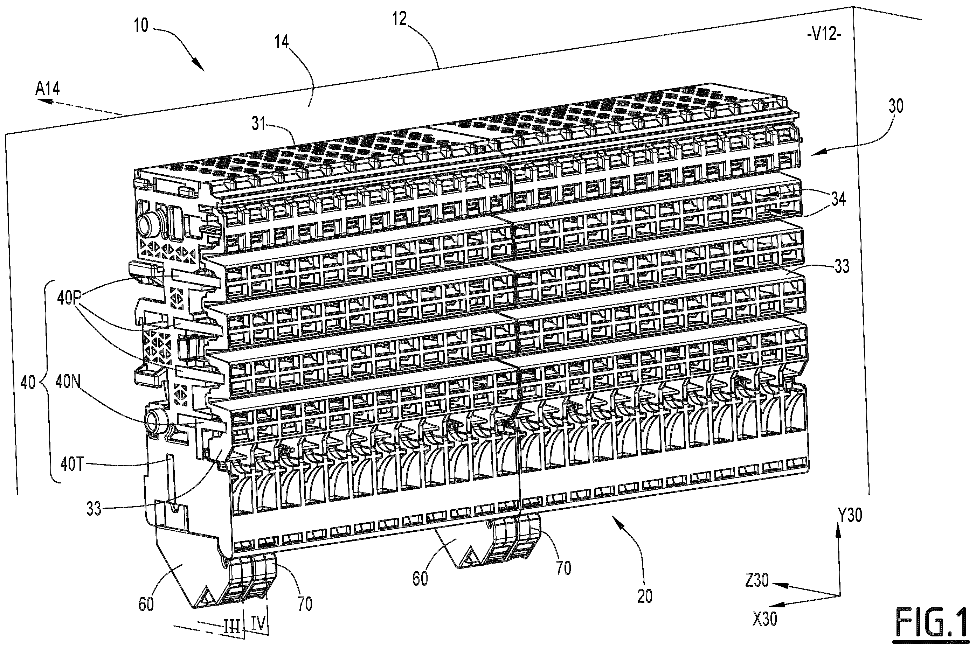

Une armoire électrique 10, conforme à l'invention, est représenté à la figure 1. L'armoire électrique 10 comprend un coffre 12, qui délimite une enceinte V12 et qui présente un fond 14. Le fond 14 s'étend globalement dans un plan orthogonal à une direction de profondeur A14. L'enceinte V12 est avantageusement refermée par une porte, qui n'est pas représentée.

L'armoire électrique 10 comprend un ensemble de distribution 20, partiellement représenté à la figure 1. L'ensemble de distribution 20 est avantageusement fixé sur le fond 14 du coffre 12.

En variante non représentée, l'armoire électrique 10 comprend des rails de fixation, fixés sur le fond 14 du coffre 12, et l'ensemble de distribution est fixé, ou monté, sur les rails de fixation. Dans ce cas, l'armoire électrique 10 est fixée sur le fond 14 de manière indirecte.

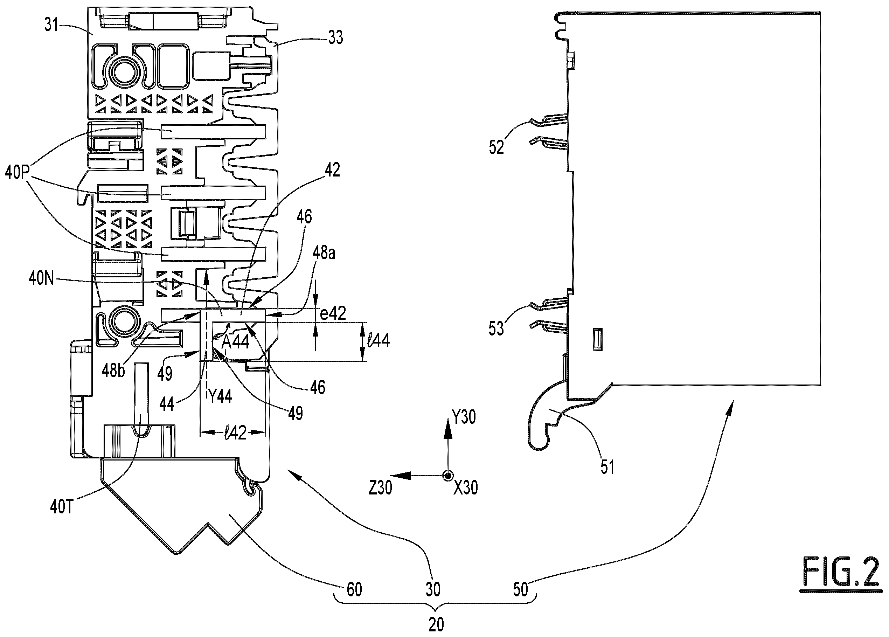

L'ensemble de distribution 20 comprend un dispositif de distribution de courant électrique 30, aussi appelé simplement dispositif de distribution, par lequel l'ensemble de distribution 20 est fixé sur le fond 14, au moins un dispositif de protection électrique 50, visible à la figure 2, et au moins une unité auxiliaire de neutre 60.

L'ensemble de distribution 20 est configuré pour distribuer de l'énergie électrique provenant d'une source de puissance à au moins une charge électrique, la source de puissance délivrant un courant avec une pluralité de phases. Dans l'exemple illustré, la source de puissance est une source triphasée, délivrant un courant avec trois phases, et également un neutre.

Le dispositif de distribution 30 présente une forme allongée, qui s'étend parallèlement à une direction longitudinale X30. Dans l'exemple de la figure 1, lorsque l'ensemble de distribution 20 est dans une configuration normale de fonctionnement, la direction longitudinale X30 est parallèle au fond 14, autrement dit orthogonale à la direction de profondeur A14. De préférence, lorsque l'ensemble de distribution 20 est dans une configuration normale de fonctionnement, la direction longitudinale principale X30 est horizontale, comme illustré à la figure 1.

En variante non représentée, lorsque l'ensemble de distribution 20 est dans une configuration normale de fonctionnement, la direction longitudinale principale X30 est verticale.

On définit une direction transversale principale Y30 comme étant orthogonale à la fois à la direction de profondeur A14 et à la direction longitudinale principale X30, et une direction de profondeur Z30, comme étant orthogonale aux directions X30 et Y30, de sorte qu'un trièdre formé par les directions longitudinale X30, transversale Y30 et de profondeur Z30 soit un trièdre direct.

Le dispositif de distribution 30 comprend un support arrière 31 et un support avant 33. En pratique, le dispositif de distribution 30 comprend une pluralité de supports arrière 31, disposés les uns par rapport aux autres selon la direction longitudinale X30, et de supports avant 33. Sur la figure 1, deux supports arrière 31 et deux supports avant 33 sont représentés.

Les supports arrière 31 et avant 33 sont réalisés en un matériau électriquement isolant, par exemple en polymère synthétique.

Chaque support arrière 31 est fixé au fond 14, ou, en variante, à des rails de fixation eux-mêmes fixés au fond 14.

Chaque support avant 33 comprend des orifices traversants 34 selon la direction de profondeur Z30, organisés en rangées d'orifices selon les directions longitudinale X30, et transversale Y30, ainsi que visible sur la figure 1.

Chaque support avant 33 est monté sur l'un des supports arrière 31, par exemple par complémentarité de forme avec le support arrière 31. Lorsque le support avant 33 est monté sur le support arrière 31 et que le support arrière 31 est fixé au fond 14, le support avant 33 est visible et accessible par un utilisateur. Autrement dit le support avant 33 est orienté vers « l'avant » lorsque le support arrière 31 est fixé au fond 14.

Le dispositif de distribution 30 comprend également un bus de puissance 40, comprenant au moins une barre de phase 40P s'étendant parallèlement à la direction longitudinale principale X30. Avantageusement, le bus de puissance 40 comprend une pluralité, par exemple trois barres de phase 40P, disposées parallèlement les unes par rapport aux autres selon la direction transversale Y30. Les barres de phase 40P sont alors toutes parallèles à la direction longitudinale X30. En variante non représentée, le bus de puissance 40 comprend plus de trois barres de phase 40P, disposées parallèlement les unes par rapport aux autres selon la direction transversale Y30.

Les barres de phase 40P du bus de puissance 40 sont des parallélépipèdes rectangles, dont la plus petite dimension est mesurée selon la direction transversale Y30, ainsi que visible sur les figures 2 à 4.

Les barres 40P sont en matériau électriquement conducteur, comme un métal, et de préférence en cuivre.

Chaque barre 40P du bus de puissance 40 est insérée dans les supports arrière 31, ainsi que bien visible sur les figures 2 à 4, et recouverte par les supports avant 33 selon la direction de profondeur Z30.

Ainsi que visible sur les figures 1 à 4, le bus de puissance 40 comprend en outre une barre de neutre 40N, s'étendant selon la direction longitudinale X30. La barre de neutre 40N est en matériau électriquement conducteur, comme un métal, et de préférence en cuivre. La barre de neutre 40N est avantageusement l'unique barre de neutre dans le bus de puissance 40. La barre de neutre 40N est alignée avec au moins l'une des barres de phase 40P selon la direction transversale Y30, et dans l'exemple des figures, est alignée avec les trois barres de phase 40P selon la direction transversale Y30. Avantageusement, les barres de phase 40P sont disposées par-delà la barre de neutre 40N selon la direction transversale Y30. La barre de neutre 40N est insérée dans les supports arrière 31, ainsi que visible aux figures 2 à 4, et recouverte par les supports avant 33 selon la direction de profondeur Z30.

La barre de neutre 40N, bien visible aux figures 2 à 4, comprend une partie frontale 42 et une partie latérale 44.

La partie frontale 42 s'étend parallèlement à la direction longitudinale X30. Elle comprend avantageusement deux faces longitudinales 46, qui s'étendent parallèlement à la direction longitudinale X30. Les faces longitudinales 46 délimitent la partie frontale 42 parallèlement à la direction transversale Y30. Les faces longitudinales 46 sont avantageusement parallèles l'une à l'autre. Une épaisseur e42 de la partie frontale 42 est avantageusement définie comme la distance entre les deux faces longitudinales 46 selon la direction Y30.

Avantageusement, la partie frontale 42 comprend un bord latéral proximal 48a et un bord latéral distal 48b, qui s'étendent parallèlement à la direction longitudinale X30. Les bords latéraux 48a et 48b délimitent la partie frontale 42 selon la direction de profondeur Z30. Les bords latéraux relient les faces longitudinales 46 entre elles. Le bord distal 48b est situé par-delà le bord proximal 48a selon la direction de profondeur Z30.

Une largeur /42 de la partie frontale 42 est avantageusement définie comme la distance entre les deux bords latéraux 48a et 48b selon la direction de profondeur Z30.

La partie latérale 44 s'étend parallèlement à la direction longitudinale X30. Elle comprend avantageusement des faces longitudinales 49, qui s'étendent parallèlement à la direction longitudinale X30 et qui sont parallèles entre elles.

La partie latérale 44 est reliée à la partie frontale 42. Avantageusement, l'une des faces longitudinale 49 de la partie latérale 44 est reliée à l'une des faces longitudinales 46 de la partie frontale 42 et l'autre face longitudinale 49 est reliée au bord latéral distal 48b. La partie frontale 42 est ainsi disposée au moins partiellement entre le support avant 31 et la partie latérale 44 selon la direction de profondeur Z30.

La partie latérale 44 s'étend depuis la partie frontale 42 en s'éloignant des barres de phase 40P. La partie latérale 44 s'étend, en outre, parallèlement à une direction latérale Y44, en formant un angle A44 avec la partie frontale 42. Dans l'exemple des figures 2 à 4, l'angle A44 est formé entre la face longitudinale 46 reliée à l'une des faces longitudinale 49 et la face longitudinale 49 à laquelle elle est reliée. L'angle A44 est avantageusement compris entre 80 et 100 degrés, de préférence compris entre 85 et 95 degrés.

Avantageusement, la partie latérale 44 affleure avec le bord distal 48b.

Dans l'exemple des figures 2 à 4, la direction latérale Y44 est parallèle à la direction transversale Y30. L'angle A44 est alors égal à 90 degrés et les parties frontale 42 et latérale 44 s'étendent à angle droit l'une de l'autre. Autrement dit, les parties frontale 42 et latérale 44 forment un « L » entre elles, les parties frontale 42 et latérale 44 formant chacune une des barres du « L ». Dans ce cas, la face longitudinale 49 reliée au bord distal 48b prolonge le bord distal 48b parallèlement à la direction transversale Y30.

Avantageusement, une largeur *ℓ*44 de la partie latérale 44 est mesurée selon la direction latérale Y44. De manière optionnelle, la largeur *ℓ*42 de la partie frontale 42 est strictement supérieure à la largeur *ℓ*44 de la partie latérale 44. Par exemple, une largeur *ℓ*42 de la partie frontale 42 est comprise entre 13 et 16mm, par exemple égale à 15,5mm et une largeur *ℓ*44 de la partie latérale est comprise entre 11 et 13mm, par exemple égale à 12,5mm, les largeurs *ℓ*42 et *ℓ*44 n'étant jamais toutes deux égales à 13mm sur la même barre de neutre 40N. Cela permet notamment d'éviter d'insérer la barre de neutre 40N de manière incorrecte dans les supports arrière 31.

Avantageusement, les parties frontale 42 et latérale 44 viennent de matière l'une avec l'autre. Autrement dit, les parties frontale 42 et latérale 44 sont formées d'une seule pièce, par exemple à partir d'une seule barre qui a été tordue pour former les parties frontale 42 et latérale 44.

Avantageusement, le bus de puissance 40 comprend, en outre, une barre de terre 40T, s'étendant selon la direction longitudinale X30.

La barre de terre 40T du bus de puissance 40 est un parallélépipède rectangle, dont la plus petite dimension est mesurée selon la direction d'épaisseur Z30, ainsi que visible sur les figures 2 à 4.

La barre de terre 40T est en matériau électriquement conducteur, comme un métal, et de préférence en cuivre.

La barre de terre 40T est avantageusement insérée dans les supports arrière 31, ainsi que visible aux figures 2 à 4. La barre de neutre 40N est avantageusement disposée par-delà la barre de terre 40T selon la direction transversale Y30.

La barre de terre 40T est avantageusement à distance de la barre de neutre 40N selon les directions transversale Y30 et de profondeur Z30. Autrement dit, la barre de terre 40T n'est pas alignée avec les barres de phase 40P et de neutre 40N selon la direction transversale Y30, mais est décalée de ces dernières selon la direction de profondeur Z30.

Le dispositif de protection électrique 50 est monté sur le dispositif de distribution 30, par exemple sur une face dite « avant » du dispositif de distribution 30, orthogonale à la direction de profondeur Z30. La face avant est orientée vers « l'avant », c'est-à-dire est accessible par un utilisateur, lorsque le support arrière 31 est fixé au fond 14.

Le dispositif de protection électrique 50 est avantageusement monté sur le dispositif de distribution 30 par coopération de formes entre le dispositif de protection électrique 50 et les supports avant 33 ou arrière 31, par exemple grâce à des crochets 51 inclus dans le dispositif de protection électrique 50. Le dispositif de protection électrique 50 est par exemple un disjoncteur différentiel.

Le dispositif de connexion électrique 50 est connecté électriquement entre le bus de puissance 40 et une première charge électrique, non représentée, qui consomme de l'électricité.

A cet effet, dans l'exemple de la figure 2, le dispositif de protection électrique 50 comprend un connecteur de phase 52 et un connecteur de neutre 53, électriquement conducteurs, qui, lorsque le dispositif de protection électrique 50 est monté sur le dispositif de distribution 30, traversent les orifices traversants 34 et qui sont en contact avec respectivement l'une des barres de phase 40P et la barre de neutre 40N. Par exemple le connecteur de phase 52 pince l'une des barres de phase 40P et le connecteur de neutre 53 pince la barre de neutre 40N, afin d'assurer la connexion électrique entre l'une des barres de phase 40P, la barre de neutre 40N et le dispositif de protection électrique 50. Plus précisément, le connecteur de neutre 53 connecté à la barre de neutre 40N est connecté à la partie frontale 42. Par exemple le connecteur de neutre 53 pince la partie frontale 42.

Les connecteurs 52 et 53, et donc, le dispositif de protection électrique 50, sont ainsi directement connectés à l'une des barres de phase 40P et à la partie frontale 42, pour assurer la connexion électrique de l'une des barres de phase 40P et de la barre de neutre 40N au dispositif de protection électrique 50. Par « directement connectés », on entend que la connexion électrique est réalisée par contact direct, et notamment, sans utiliser de câbles reliant la barre de phase 40P et connecteur de phase 52 d'une part, et la barre de neutre 40N et connecteur de neutre 53 d'autre part.

Le fait que la partie frontale 42 est disposée au moins partiellement entre le support avant 31 et la partie latérale 44 selon la direction de profondeur Z30 facilite avantageusement la connexion entre l'un des connecteurs 52 et la partie frontale 42, notamment en laissant libre la partie frontale 42 orientée vers le support avant 33, qui peut alors être pincée par l'un des connecteurs 52.

Ainsi, lorsque l'ensemble de distribution 20 est en fonctionnement normal, il connecte électriquement la source de puissance et la première charge électrique, via les barres de phase 40P et de neutre 40N et le dispositif de protection électrique 50.

Le dispositif de protection électrique 50 est dans l'exemple de la figure 2, en une seule partie. En variante non représentée, le dispositif de protection électrique 50 est en deux parties, par exemple un disjoncteur et un adaptateur pour monter le disjoncteur sur le dispositif de distribution 30.

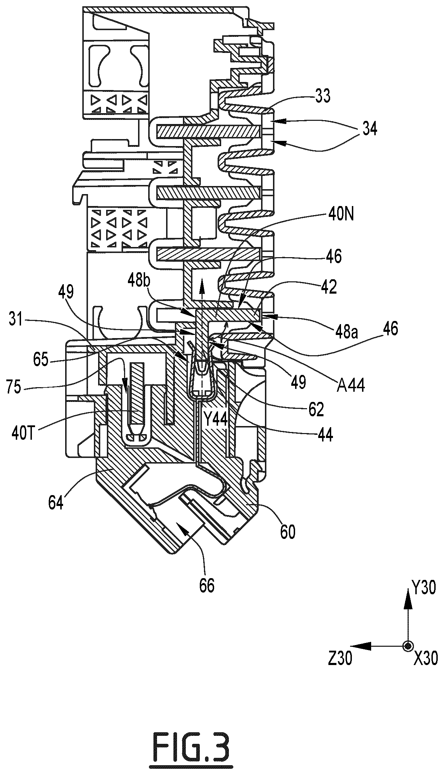

L'unité auxiliaire de neutre 60 est visible aux figures 1 et 3. L'unité auxiliaire de neutre 60 comprend un connecteur auxiliaire de neutre 62, et avantageusement un support 64, comprenant un logement 65 dans lequel le connecteur auxiliaire de neutre 62 est inséré. Avantageusement, et ainsi que visible à la figure 3, le support 64 comprend une borne 66, connectée électriquement au connecteur auxiliaire de neutre 62.

Lorsque l'ensemble de distribution 20 est en fonctionnement normal, l'unité auxiliaire de neutre 60 est montée sur le dispositif de distribution 30, par exemple par coopération de formes entre l'un des supports arrières 31 et le support 64. Le connecteur auxiliaire de neutre 62 est alors monté sur le dispositif de distribution 30. L'unité auxiliaire de neutre 60 est avantageusement montée sur le dispositif de distribution 30 selon la direction transversale Y30, sur des emplacements distincts de ceux sur lesquels sont montés le dispositif de protection électrique 50, et plus généralement, les dispositifs de protection électrique. Dans l'exemple des figures 1 et 3, l'unité auxiliaire de neutre 60 est montée sur une face latérale du dispositif de distribution, orthogonale à la direction transversale Y30. Ainsi, la présence de dispositifs de protection, ou plus généralement, un encombrement de la face avant du dispositif de distribution 30, est sans incidence sur le nombre d'unités auxiliaires de neutre 60 qui peuvent être montées sur le dispositif de distribution 30.

Lorsque l'unité auxiliaire de neutre 60 est montée sur le dispositif de distribution 30, le connecteur auxiliaire de neutre 62 est connecté à la partie latérale 44 de la barre de neutre 40N, selon la direction latérale Y44. Dans l'exemple des figures 2 à 4, la direction latérale Y44 étant parallèle à la direction transversale Y30, le connecteur auxiliaire de neutre 62 est alors également connecté à la partie latérale 44 de la barre de neutre 40N, selon la direction transversale Y30.

Le connecteur auxiliaire de neutre 62 est, en particulier, directement connecté à la partie latérale 44, par exemple en pinçant la partie latérale 44, ainsi que visible sur la figure 3.

L'unité auxiliaire de neutre 60 comprend avantageusement un câble, non représenté, branché dans la borne 66 et qui connecte électriquement le connecteur auxiliaire de neutre 62 et une deuxième charge électrique. L'unité auxiliaire de neutre 60 permet ainsi de connecter la deuxième charge électrique à la barre de neutre 40N, via un contact direct entre l'unité auxiliaire de neutre et la barre de neutre 40N.

L'unité auxiliaire de neutre 60 est généralement associée à un dispositif de protection électrique connecté uniquement à l'une des barres de phase 40P, dit par exemple dispositif de protection 1P, ou en variante, un dispositif de protection électrique connecté à plusieurs barres de phases 40P, par exemple trois, dit alors dispositif de protection 3P. Dans ce cas, l'unité auxiliaire de neutre 60 et le dispositif de protection 1P ou 3P sont connectés à la même deuxième charge électrique, afin d'assurer une connexion électrique de la deuxième charge électrique à l'une des barres de phase 40P et à la barre de neutre 40N.

Avantageusement, l'ensemble de distribution 20 comprend une ou plusieurs unités auxiliaires de terre 70. Deux unités auxiliaires de terre 70 sont visibles à la figure 1. L'une des unités auxiliaires de terre 70 est, par exemple, associée au dispositif de protection électrique 50. La description qui suit est valable pour chaque unité auxiliaire de terre 70.

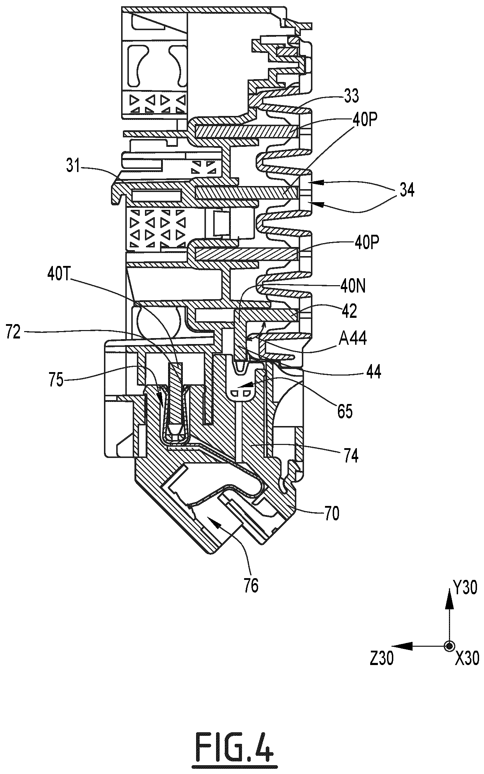

L'unité auxiliaire de terre 70 comprend un connecteur auxiliaire de terre 72, et avantageusement un support 74, comprenant un logement 75 dans lequel le connecteur auxiliaire de terre 72 est inséré. Avantageusement, et ainsi que visible à la figure 4, le support 74 comprend une borne 76, connectée électriquement au connecteur auxiliaire de terre 72.

Le support 74 est avantageusement identique au support 64 de l'unité auxiliaire de neutre 60. Dans ce cas les supports 64 et 74 comprennent chacun les logements 65 et 75, dans lesquels sont respectivement insérés le connecteur auxiliaire de neutre 62 dans le cas de l'unité auxiliaire de neutre 60, et le connecteur auxiliaire de terre 72 dans le cas de l'unité auxiliaire de terre 70.

Lorsque l'ensemble de distribution 20 est en fonctionnement normal, l'unité auxiliaire de terre 70 est montée sur le dispositif de distribution 30, par exemple par coopération de formes entre l'un des supports arrières 31 et le support 64. Le connecteur auxiliaire de terre 72 est alors monté sur le dispositif de distribution 30. L'unité auxiliaire de terre 70 est avantageusement montée sur le dispositif de distribution 30 selon la direction transversale Y30, sur la face latérale, et notamment sur les emplacements également adapté à l'unité auxiliaire de neutre 60.

Le connecteur auxiliaire de terre 72 est alors connecté à la barre de terre 40T, selon la direction transversale Y30, par exemple en pinçant la barre de terre 40T, ainsi que visible sur la figure 4. La connexion entre le connecteur auxiliaire de terre 72 et la barre de terre 40T est ainsi une connexion directe. La position de la barre de terre 40T permet ainsi au connecteur auxiliaire de terre 72 monté sur le dispositif de distribution 30 de se connecter à la barre de terre 40T selon la direction transversale Y30.

L'unité auxiliaire de terre 70 comprend avantageusement un câble, non représenté, branché dans la borne 76 et qui connecte électriquement le connecteur auxiliaire de terre 72 à une charge électrique, non représentée. L'unité auxiliaire de terre 70 permet ainsi de connecter la charge électrique à la barre de terre 40T, via un contact direct avec la barre de terre 40T.

L'unité auxiliaire de terre 70 est avantageusement associée avec le dispositif de protection électrique 50, par exemple si la première charge électrique, à laquelle le dispositif de protection électrique 50 est connecté, nécessite une connexion à la terre. En variante, l'unité auxiliaire de terre 70 est associée à un autre dispositif de protection électrique monté sur le dispositif de distribution 30.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Dispositif de distribution de courant électrique (30) pour une armoire électrique, le dispositif de distribution (30) comprenant :
- au moins une barre de phase (40P), s'étendant selon une direction longitudinale (X30) ;
- un support arrière (31), dans lequel la ou chaque barre de phase (40P) est insérée ;
- un support avant (33), recouvrant chaque barre de phase (40P) selon une direction de profondeur (Z30) ;
**caractérisé en ce que** le dispositif de distribution (30) comprend en outre une barre de neutre (40N), s'étendant selon la direction longitudinale (X30), la barre de neutre (40N) étant alignée avec la barre de phase (40P) selon une direction transversale (Y30), la barre de neutre (40N) comprenant :
- une partie frontale (42), s'étendant parallèlement à la direction longitudinale (X30), afin d'être connectée électriquement, selon la direction de profondeur (Z30), à un dispositif de protection électrique (50) monté sur le dispositif de distribution (30);
- une partie latérale (44), qui s'étend parallèlement à la direction longitudinale (X30), qui est reliée à la partie frontale (42),
**en ce que** la partie frontale (42) est disposée au moins partiellement entre le support avant (31) et la partie latérale (44) selon la direction de profondeur (Z30), et
**en ce que** la partie latérale (44) s'étend depuis la partie frontale (42) parallèlement à une direction latérale (Y44) , en formant un angle (A44) avec la partie frontale (42) et en s'éloignant de la barre de phase (40P), afin de connecter électriquement, selon la direction latérale (Y44), la partie latérale (44) à un connecteur auxiliaire de neutre (62) monté sur le dispositif (30).

2. Dispositif de distribution (30) selon la revendication 1, comprenant une pluralité de barres de phase (40P), chaque barre de phase (40P) s'étendant selon la direction longitudinale (X30), les barres de phase (40P) étant disposées parallèlement les unes par rapport aux autres selon la direction transversale (Y30), et la barre de neutre (40N) étant alignée avec les barres de phase (40P) selon la direction transversale (Y30) et les barres de phase (40P) étant disposées par-delà la barre de neutre (40N) selon la direction transversale (Y30).

3. Dispositif de distribution (30) selon l'une quelconque des revendications précédentes, dans lequel la partie latérale (44) est reliée à la partie frontale (42) en étant reliée à une face longitudinale (46) et à un bord latéral distal (48b) de la partie frontale (44).

4. Dispositif de distribution (30) selon l'une quelconque des revendications précédentes, dans lequel une largeur (/42) de la partie frontale (42), mesurée selon la direction de profondeur (Z30), est strictement supérieure à une largeur (/44) de la partie latérale (44), mesurée selon la direction latérale (Y44).

5. Dispositif de distribution (30) selon l'une quelconque des revendications précédentes, dans lequel l'angle (A44) formé entre les parties frontale (42) et latérale (44) est compris entre 80 et 100 degrés, de préférence compris entre 85 et 95 degrés.

6. Dispositif de distribution (30) selon l'une quelconque des revendications précédentes, dans lequel les parties frontale (42) et latérale (44) viennent de matière l'une avec l'autre.

7. Dispositif de distribution (30) selon l'une quelconque des revendications précédentes, comprenant en outre une barre de terre (40T), s'étendant selon la direction longitudinale (X30), la barre de terre (40T) étant disposée à distance de la barre de neutre (40N) selon les directions transversale (Y30) et de profondeur (Z30), de sorte qu'un connecteur auxiliaire de terre (72) monté sur le dispositif de distribution (30) se connecte à la barre de terre (40T) selon la direction transversale (Y30).

8. Ensemble de distribution (20), comprenant :
- un dispositif de distribution (30) selon l'une quelconque des revendications précédentes ;
- un dispositif de protection électrique (50), monté sur le dispositif de distribution (30), le dispositif de protection électrique (50) comprenant un connecteur de neutre (53), connecté électriquement et directement à la partie frontale (42) selon la direction de profondeur (Z30) ; et
- un connecteur auxiliaire de neutre (62), inclus dans une unité auxiliaire de neutre (60) montée sur le dispositif de distribution (30), le connecteur auxiliaire de neutre (62) étant connecté électriquement et directement à la partie latérale (44) selon la direction latérale (Y44).

9. Ensemble de distribution (20), comprenant :
- un dispositif de distribution (30) selon la revendication 7 ;
- un dispositif de protection électrique (50), monté sur le dispositif de distribution (30), le dispositif de protection électrique (50) comprenant un connecteur de neutre (53), connecté électriquement et directement à la partie frontale (42) selon la direction de profondeur (Z30), un connecteur auxiliaire de neutre (62), connecté électriquement et directement à la partie latérale (44) selon la direction transversale (Y30) ; et
- un connecteur auxiliaire de terre (72), inclus dans une unité auxiliaire de terre (70) montée sur le dispositif de distribution (30), le connecteur auxiliaire de terre (72) étant connecté électriquement et directement à la barre de terre (40T) selon la direction transversale (Y30).

10. Armoire électrique (10), comprenant :
- un coffre (12) délimitant une enceinte (V12) et présentant un fond (14) ; et
- un ensemble de distribution (20) selon l'une quelconque des revendications 8 ou 9, le dispositif de distribution (30) étant disposé dans l'enceinte (V12) et fixé sur le fond (14) du coffre (12).
